# EUROPEAN PATENT APPLICATION

(11) **EP 2 809 075 A2**
(43) Date of publication of application: **03.12.2014**
(21) Application number: 14155640.7
(22) Date of filing: 18.02.2014
(51) Int. Cl.: H04N 21/2362, H04N 21/426, H04N 21/433, H04N 21/438, H04N 21/462

(54) **Method and apparatus of channel switching using pre-acquisited PSI tables**

(30) Priority: 08.05.2013 KR 20130051739
(71) Applicant: Humax Co., Ltd., Gyeonggi-do 463-875 (KR)
(72) Inventor: Kim, Tae Gap, 463-440 Gyeonggi-do (KR)
(74) Representative: Zardi, Marco

(57) **Abstract**

The present invention provides a method (S410-S450) and an apparatus (360) for switching channels to reduce channel zapping time, which use channel information (PSI) obtained prior to channel switching (S420) to generate (i.e., extract from a transport stream) audio and video data of a switched channel, thereby skipping the process of calculating channel information of a channel to be switched at the time of channel switching (S450). Channel information can be obtained for example by using an "idling" tuner amon a plurality of tuners (320), by using an IP network (305), or by transporting program association tables (PAT) respectively program map tables (PMT) for a plurality of transport streams over a single transport stream in order that the receiver obtains channel information for plural transport streams without receiving all of them.

## Description

Priority to Korean patent application number 2013-0051739 filed on May 8, 2013, the entire disclosure of which is incorporated by reference herein, is claimed.

### BACKGROUND OF THE INVENTION

### Field of the Invention

The present invention is related to a method for receiving broadcast signals, more specifically, a method for switching broadcast channels.

### Discussion of the Related Art

IPTV services, which provide two-way TV services through the Internet, are in common use along with the TV services using conventional broadcasting networks. An IPTV is connected to a set-top box which converts IP video signals to standard TV signals and if a switched video service (SVS) system is used, can connect selectively to a broadband network channel or a service such as a subscriber service and a movie according to a user's preference.

The IPTV has advantages such as high quality video and various additional services as well as two-way interactivity not found in the analog broadcasting such as the conventional terrestrial broadcasting.

Despite these advantages, when a user watching a particular channel attempts to switch to another one, conventional IPTVs cause a time delay (zapping delay) longer than that of analog broadcasting until channel switching is completed. The channel zapping time developed at the time of switching channels of IPTVs results from a transmission and reception method used for the IPTVs; thus, there needs a method for reducing the channel zapping time in a broadcasting system such as the IPTV.

### SUMMARY OF THE INVENTION

To solve the aforementioned problem, the present invention provides a method and apparatus for switching channels which reduce channel zapping time inherent in channel switching.

In a method for switching channels carried out by a media play apparatus, a method for switching channels according to one embodiment of the present invention intended to solve the aforementioned problem comprises obtaining information about a plurality of channels; receiving a channel switching signal; and generating channel data according to the channel switching signal by using the obtained channel information.

The obtaining information about a plurality of channels can comprise obtaining channel information by using at least one idling tuner among a plurality of tuners.

The obtaining channel information by using at least one idling tuner among a plurality of tuners can comprise obtaining channel information of a channel not included in a transport stream under reception.

The channel information can be transported being contained in a program association table (PAT) or program map table (PMT) including identifiers for a plurality of transport streams.

The PAT or PMT can further include an identifier indicating a transport stream in which the PAT or PMT is included.

The channel information can be transported being contained in the PAT or PMT of a transport stream, and the channel information can further include channel information of a channel contained in another transport stream.

The obtaining information of a plurality of channels can comprise obtaining channel information by using an IP network.

The obtaining information about a plurality of channels can comprise receiving channel information from a transport stream received by using a tuner; and receiving channel information of a channel not included in the transport stream from a server by using an IP network.

Also, in an apparatus for switching channels of a media play apparatus, an apparatus for switching channels according to one embodiment of the present invention to solve the aforementioned problem comprises at least one tuner obtaining information about a plurality of channels; and a controller extracting channel information from the channel data and generating channel data according to a received channel switching signal by using the previously obtained channel information.

The apparatus for switching channels can obtain the channel information by using at least one idling tuner.

The idling tuner can obtain channel information of a channel not included in a transport stream under reception.

The channel information can be transported being contained in a PAT or PMT including identifiers of a plurality of transport streams.

The channel information can correspond to a PAT or PMT which includes only channel information of a channel contained in another transport stream.

The channel information is a PAT or PMT which further includes channel information of a channel included in another transport stream, and the PAT or PMT can further include an identifier indicating a transport stream in which the PAT or PMT is included.

The apparatus for switching channels can further comprise an IP transceiver which receives channel information from a server by using an IP network.

The IP transceiver can receive channel information of a channel from a server, the channel being not included in a transport stream received through the tuner.

The apparatus for switching channels can further comprise memory in which obtained channel information is stored, and the controller can store the obtained channel information in the memory when channel information stored in the memory is different from the obtained channel information and perform channel switching according to the channel switching signal by using the channel information stored in the memory.

Also, in a media data transport packet, a media data transport packet according to one embodiment of the present invention to solve the aforementioned problem comprises transport stream identifiers for a plurality of media data.

The media data transport packet includes a PAT or PMT, and the PAT or PMT can each include the transport stream identifier for a plurality of media data.

### BRIEF DESCRIPTION OF THE DRAWINGS

The accompanying drawings, which are included to provide a further understanding of the present invention and constitute a part of specifications of the present invention, illustrate embodiments of the present invention and together with the corresponding descriptions serve to explain the principles of the present invention.
FIG. 1 is a conceptual illustration of generating and transporting a transport stream;
FIG. 2 shows various channels allocated in the respective frequency bands;
FIG. 3 is a block diagram of an apparatus for switching channels according to one embodiment of the present invention;
FIG. 4 is a flow diagram of a method for switching channels according to one embodiment of the present invention;
FIG. 5 illustrates the conventional PAT;
FIG. 6 illustrates the conventional PMT;
FIG. 7 illustrates a transport_stream_id according to one embodiment of the present invention;
FIG. 8 illustrates a PAT according to another embodiment of the present invention; and
FIG. 9 illustrates a PMT according to one embodiment of the present invention.

### DETAILE DESCRIPTION OF THE INVENTION

The present invention can be modified in various ways and various embodiments of the present invention can be realized; thus, this document illustrates particular embodiments in the appended drawings and detailed description of the embodiment will be provided.

That is not meant, however, for limiting the present invention to the particular embodiments; rather, it should be understood to include every possible modification, equivalent, or substitute of the present invention which belongs to the technical principles and scope of the present invention.

Terms such as first and second can be used for describing various components but the components should not be limited by the terms. The terms are introduced only for the purpose of distinguishing one component from the others. For example, a first component may be called a second component without departing from the scope of the present invention and vice versa. The term of and/or indicates a combination of a plurality of related items described or any one of a plurality of related items described.

If a component is said to be "linked" or "connected" to a different component, the component may be directly linked or connected to the different component but a third component may exist to connect the two components even though the two components may be connected directly. On the other hand, if a component is said to be "linked directly" or "connected directly" to another component, it should be interpreted that there is no further component between the two components.

Terms used in this document have been introduced only to describe particular embodiment, not intended to limit the scope of the present invention. Singular expression should be interpreted to include plural expressions unless otherwise stated explicitly. Terms such as "include" or "have" are meant to signify existence of embodied characteristics, numbers, steps, behavior, components, modules, and combinations thereof, which should be understood that possibility of existence or addition of one or more characteristics, numbers, steps, behavior, components, modules, and combinations thereof are not precluded beforehand.

Unless otherwise defined, all the terms used in this document, whether they are technical or scientific, possess the same meaning as understood by those skilled in the art to which the present invention belongs. The terms such as those defined in a dictionary for general use should be interpreted to carry the same contextual meaning in the related technology, and they should not be interpreted to possess an ideal or excessively formal meaning.

In what follows, with reference to appended drawings, preferred embodiments of the present invention will be described in more detail. To help overall understanding of the present invention, the same components in the drawings use the same reference symbols, and descriptions of the same components are omitted.

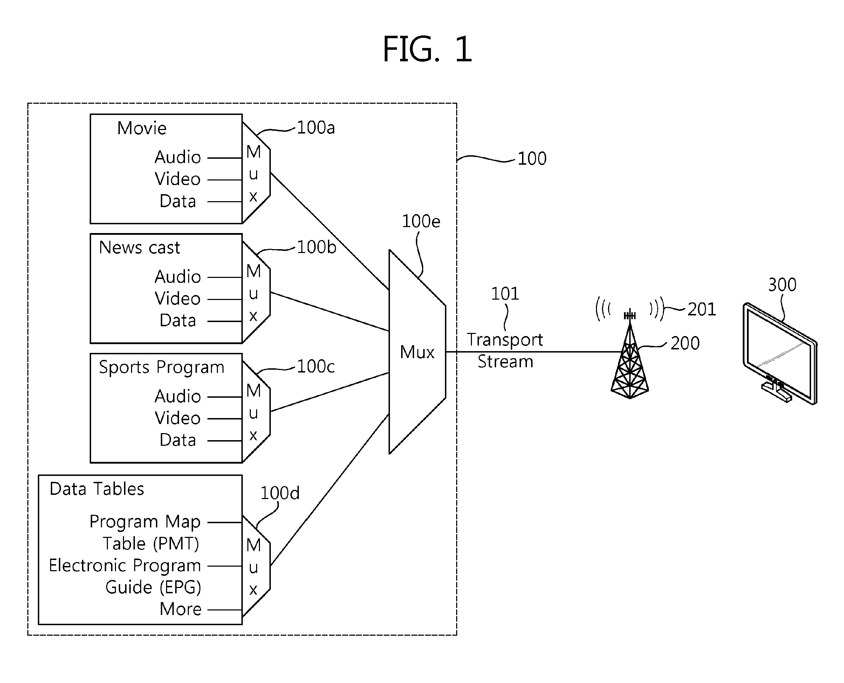

FIG. 1 is a conceptual illustration of generating and transporting a transport stream. FIG. 1 illustrates a TS generator 100, TS transporter 200, and TS receiver 300. The TS generator 100 aggregates a movie, news cast, sport program, and data table into a transport stream (TS) by using a multiplexer, and the generated TS is delivered to the TS transporter 200. The TS generated in the TS generator 100 includes a movie, news cast, sport program, and data table. The movie, news, and sport program contains audio, video, and data; and can be played in the TS receiver 300 afterwards. For example, audio, video, and data of a movie are multiplexed in the multiplexer 100a, and a data object containing the movie program is generated. Similarly, news cast and sport program are each multiplexed in the multiplexer 100b, 100c.

The data table includes a PMT (Program Map Table), EPG (Electronic Program Guide), and other information; the data table further includes information related to transport of a TS carried out by the TS transporter 200 and reception and use of a TS by the TS receiver 300. The PMT, EPG, and so on of the data table are multiplexed in the multiplexer 100d, and a data object containing the data table is generated.

The individual data objects generated by multiplexing in the respective multiplexers 100a, 100b, 100c, 100d are multiplexed one more time in a multiplexer 100e, generating a TS.

The TS transporter 200 receives a TS generated in the TS generator 100 and transports the received TS to the TS receiver 300 by using wired or wireless communication. For example, the TS transporter 200 transports a TS by using satellite, terrestrial, cable, or other communication means. The TS transporter 200 transports a TS to a designated frequency band so that each individual TS can occupy a separate frequency band.

The TS receiver 300 can obtain information needed to receive a TS by using the data table included in the TS. For example, a TS includes a plurality of services such as a movie, news, TV, radio, and data channel. To indicate inclusion of such services as above, the TS can include information such as PAT (Program Association Table), PMT (Program Map Table), and SDT (Service Description Table) in the data table.

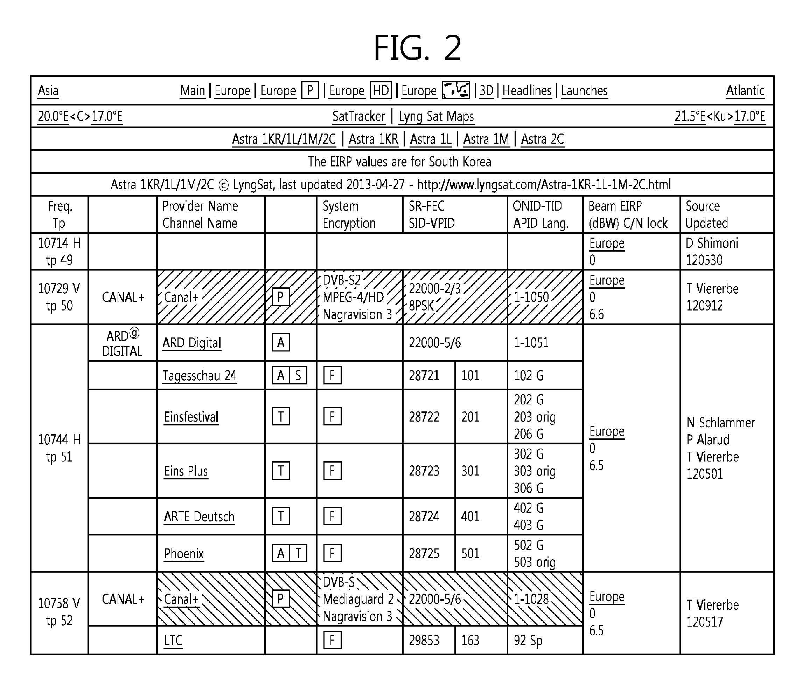

FIG. 2 illustrates channels (services) allocated in the respective frequency bands, showing allocated frequency bands of a broadcast satellite, Astra 19.2 and transponders (TPs) for the respective frequency bands.

With reference to FIG. 2, allocated frequency bands (Freq.) and transponders (TPs) are shown from the middle cell down to the bottom cell of the leftmost column. TP stands for transponder and may be a physical apparatus transporting a TS through a particular frequency band. The TP may denote one frequency band comprising multiple channels. A channel is usually referred to as a service. Therefore, the TP may be regarded as a particular frequency band including various services.

For example, with reference to FIG. 2, the number of a TP allocated to 10729 MHz frequency band is 50 and the corresponding channel name is canal+. Referring to the TP 51 allocated to 10744 MHz frequency band, multiple channels such as ARD digital, Tagesschau 24, Einsfestival, and Eins Plus are found in the 10744 MHz frequency band.

Also shown in FIG. 2 is the PID meant for extracting AV (Audio Video) data of each channel (or service). For example, the video PID (VPID) to service tagesschau 24 channel of TP 51 is 101 while the audio PID (APID) is 102. In the same way, it can be known that the VPID to service Pheonix channel is 501 while the corresponding APID is 503.

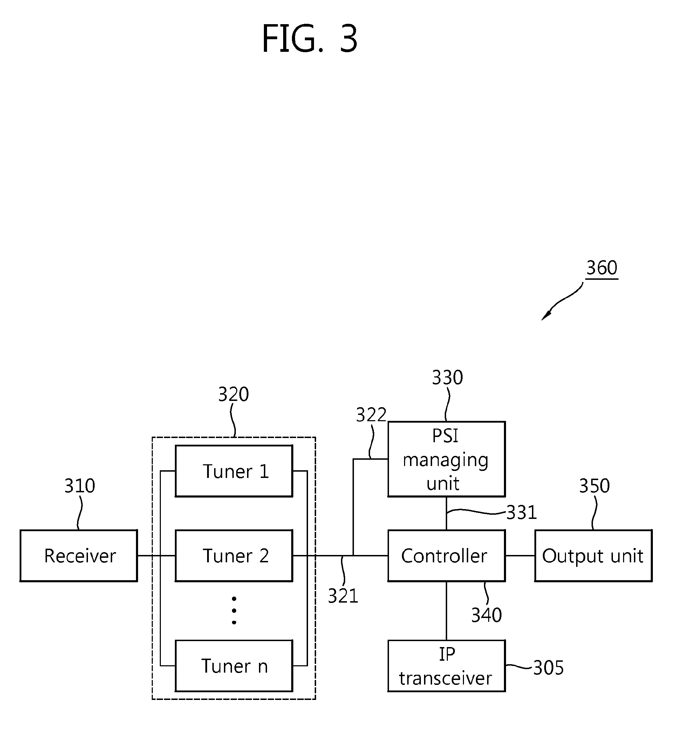

FIG. 3 is a block diagram of an apparatus 360 for switching channels according to one embodiment of the present invention.

With reference to FIG. 3, the apparatus 360 for switching channels according to one embodiment of the present invention can be installed in the TS receiver. The TS receiver may be an apparatus capable of receiving and playing a TS, such as a set-top box and a smart TV. The apparatus for switching channels can comprise an IP transceiver 305, receiver 310, tuner unit 320, PSI managing unit 330, controller 340, and output unit 350.

The IP transceiver 305 renders data received from the controller 340 into IP packets and transmits the IP packets to a network. And the IP transceiver 305 delivers data obtained by receiving IP packets from the network to the controller 340. For example, the IP transceiver 305 can request channel-related information about a particular channel from a server of a broadcasting station and in response to the request, receive from the server the channel-related information of a channel requested through the network. The channel-related information may be PSI information described later.

The receiver 310 may denote a means for receiving radio waves. For example, the receiver 310 may be an antenna. The receiver can deliver a received signal to the tuner unit 320.

The tuner unit 320 can perform tuning based on a signal received from the receiver.

For example, to receive a TS of a particular frequency band, the tuner unit 320 can perform tuning intended for receiving a TS by designating a frequency band. The tuner unit 320 can comprise a plurality of tuners; the tuner unit 320 can receive a TS of one frequency band by using one or more tuners. Also, the tuner unit 320 can receive a TS from a plurality of frequency bands by using a plurality of tuners. When the individual tuners are tuned to the respective frequency bands, the tuner 320 can receive a TS according to each frequency band.

The tuner unit 320 can deliver a TS generated from a received signal and other information to the PSI managing unit 330 and the controller 340. Meanwhile, in another embodiment of the present invention, the tuner 320 may not deliver 322 information directly to the PSI managing unit 330. In this case, the information can be delivered indirectly by a different entity. For example, the controller 340 may deliver the information delivered to the controller 340 to the PSI managing unit 330.

The PSI managing unit 330 can manage program specific information (PSI) of each channel. The PSI can include information about multiplexing of program streams within a TS and network information. For example, the PSI can include PAT (Program Association Table), PMT (Program Map Table), or CAT (Conditional Access Table). The PAT is a table carrying PIDs of PMTs. The PID of a PAT can be zero. The PMT is a table carrying PIDs of audio, video, and data stream constituting a program. The CAT is a table carrying conditional access management information. The PSI managing unit 330 can extract channel information such as PID and deliver the extracted channel information to the controller 340.

The controller 340 can control the overall operation of an apparatus for switching channels. For example, the controller 340 can control interaction and data flow of the receiver 310, tuner unit 320, PSI managing unit 330, and output unit 350. Meanwhile, in another embodiment of the present invention, the controller 340 can be implemented to carry out a function of the PSI managing unit 330.

The controller 340 demuxes a TS into audio, video, and data part to service each channel. For example, the controller 340, to separate the TS into video, audio, and the like, can use the aforementioned PID. At this time, the PMT may carry the PID.

Also, the controller 340, to obtain the PMT, obtains a TS by tuning a tuner to the frequency band of a TP, obtains the PSI from the TS, and extract the PMT of the corresponding channel from the PAT contained in the PSI. In other words, the controller 340 extracts the PID from PSI information at the time of channel switching and by using the extracted PID, extracts audio and video data. In this case, a predetermined time period is required for channel switching.

To reduce the time required for channel switching, PIDs meant for audio and video of a channel can be pre-stored. The controller 340 may search channels for PIDs or store the PIDs by receiving channel information at the time of channel switching. For example, the PID may be a PID of audio or video. The controller 340 can store PIDs of audio and video while searching the channels. For example, the controller 340, while searching the channels by using one tuner, can store PIDs of audio and video of a channel found.

Also, the controller 340 can store PIDs of channels by receiving channel information related to channels switching at the time of channel switching. For example, the related channels may be other channels of a TP including the channels switching or channels belonging to a set comprising channels of interest preset along with the channels switching. In this case, if the PID is changed, the controller 340 can change and store the PID. The controller 340 decides change of PID in case the stored PID differs from the PID of a received channel, or change of a channel's PID is reflected in the information of the received channel. In case the PID of a channel to be switched is changed, the controller 340 may store PIDs of the whole channels belonging to the TP to which the channel to be switched belongs, or check each PID of the whole channels belonging to the TP to which the channel to be switched belongs whether the PIDs have changed and store only the PIDs which have been changed. Similarly, irrespective of whether the PID of a channel to be switched has been changed, the controller 340 checks whether the PIDs of channels included in a TP to which the channels to be switched belong have been changed, and if it is found that the PIDs have been changed, the controller 340 stores the PID of the corresponding channel. In this case, too, the controller 340 can store the PID of audio and video data of a switched channel while switching channels by using one tuner.

Also, the controller 340 obtains PIDs by receiving channel information of the whole channels when the apparatus for switching channels enters a waiting mode or stays in the waiting mode, and if the PID of a channel is changed, the controller 340 stores the PID of the corresponding channel. In case the apparatus for switching channels enters the waiting mode, too, an update of the PID can be carried out by one tuner.

Further, in case two or more tuners capable of searching for TPs are employed, the controller 340 can search for channel information by using an idling tuner. An idling tuner refers to a tuner not currently used, and for example, it can be a tuner not receiving a TS. For example, while one tuner is employed to receive a TS of a first channel, an idling tuner not receiving a TS can be employed to store or update PIDs by receiving channel information of other channels. Meanwhile, in case the number of idling tuners is two or more, a plurality of channel information can be received simultaneously from a plurality of TPs by using all the tuners available.

The above examples of receiving channel information by using one tuner can be carried out by using an idling tuner. For example, while receiving a TS by using one tuner, the idling tuner can be employed to receive the channel information. Also, while receiving a TS by using at least one tuner, the controller 340 may search the channels by using an idling tuner and receive channel information and store PIDs of the channels. Also, when the apparatus for switching channels enters the waiting mode, the controller 340 can receive channel information by using the idling tuner. In these examples, too, in case the number of idling tuners is two or more, a plurality of channel information can be received at the same time from multiple TPs by using all the tuners available.

The controller 340 can receive channel information from a server by using the IP transceiver 305. The controller 340 can receive the channel information by using the IP transceiver as well as the tuner described above. For example, the controller 340 may employ the tuner to receive channel information of channels included in a TP to which currently switching channels or channels under reception belong and to update PIDs while the controller 340 may utilize the IP transceiver 305 to receive channel information of channels included in other TPs but the TP and to update the PIDs.

Furthermore, the controller 340 can receive channel information by using only the IP transceiver without employing a tuner. For example, in case the tuner is not in good reception conditions or no idling tuner is available, the controller 340 can receive channel information from a server of a broadcasting station by using the IP transceiver and obtain PIDs. For example, the controller 340 may receive channel information of a TP to which a TS-receiving channel belongs by using the IP transceiver 305 or receive channel information of the whole TPs. In this case, the controller 340 can transmit to the server a request inquiring about whether the PID of a particular channel has been changed, and the server, in response to the request, can transmit only the PID information of a channel, the PID of which has been changed to the apparatus for switching channels. In case no channel shows the PID change, the server may not reply to the request at all. The controller 340 receives only the PID information of the channel, the PID of which has been changed, changes the PID, and stores the changed PID. The request inquiring of PID change transmitted to the server by the controller 340 may include information about time at which the PID is updated in the apparatus for switching channels. Therefore, the server can transmit the PID of a channel, the PID of which has been changed, to the apparatus for switching channels after the update time.

An apparatus for switching channels according to one embodiment of the present invention can store PID information of a plurality of elementary streams (ESs) included in a plurality of TSs in the PSI managing unit 340 beforehand by using a plurality of tuners. To be more specific, the PSI managing unit 330 obtains PSI from the obtained TS and extracts PMT of the corresponding channel from the PAT of the obtained PSI. And the PSI managing unit 330 extracts PIDs within the extracted PMT. Then the PSI managing unit 330 provides the extracted PID according to a request of the controller 340. In other words, the PSI managing unit 330 extracts PIDs from PSI information of a plurality of TSs independently of channel switching and stores the extracted PIDs. The controller 340, at the time of channel switching, requests from the PSI managing unit 330 the PID of a channel to switch, and the PSI managing unit 330 provides the PID of the corresponding channel according to a request of the controller 340. The controller 340 can extract audio and video data by using the PID received from the PSI managing unit 330. In this case, a series of processes for the controller 340 to extract PIDs from a TS at the time of channel switching may be skipped. In other words, the time required for switching channels can be reduced.

The PSI is a value which can be changed as time passes; in the case of a set-top box equipped with a plurality of tuners, PID information of an ES (Elementary Stream) can be extracted periodically by receiving at least one of PSI data of the whole TPs searched by employing the resources of tuners not in use. Thus, it is made possible to perform receiving a TS by using a particular tuner while other tuners are used to extract channel information such as PSI, PAT, PMT, or PID information of other TSs.

Meanwhile, if the number of tuners capable of searching for other TPs is two or more, a plurality of channel information can be extracted at the same time from multiple TPs by using all of the available tuners. At this time, the extracted information may include all the information to reduce the time required for channel switching. For example, the extracted information may include SI (System Information), PSI (Program Specific Information), and so on.

The extracted channel information can be stored in the RAM or flash memory though not shown in FIG. 3 but included in the apparatus for switching channels. The controller 340, by using channel information stored in the RAM or flash memory, can play audio and video by performing AV filtering immediately after tuning of the tuner without extracting PIDs at the time of channel switching.

In another embodiment of the present invention, the PSI information generated at the TS generator 100 and transmitted to the TS receiver 300 can further comprise at least one of PSI_other, PAT_other, PMT_other, and PID_other. Here the PSI_other is a PSI set of at least one other TS not belonging to the corresponding TS. In the same manner, PAT_other is a parameter representing the PAT value of at least one other TS rather than the corresponding TS and refers to a set of such parameters. PMT_other is a parameter representing the PMT value of at least one other TS rather than the corresponding TS and refers to a set of such parameters. PID_other is also a parameter representing the PID value of at least one other TS rather than the corresponding TS and refers to a set of such parameters. In this case, though a plurality of tuners may not be used, the apparatus for switching channels can extract PSI, PAT, PMT, or PID of other TP from the corresponding TS along with reception of the corresponding TS. For example, while receiving a TS by using one tuner, the apparatus for switching channels can receive at least one of PSI_other, PAT_other, PMT_other, and PID_other, which can be received by using an idling tuner or from a server by using the IP transceiver 305.

In what follows, a method for switching channels according to one embodiment of the present invention will be described. From the descriptions below, the structure and operation of the apparatus for switching channels will also be more clearly understood.

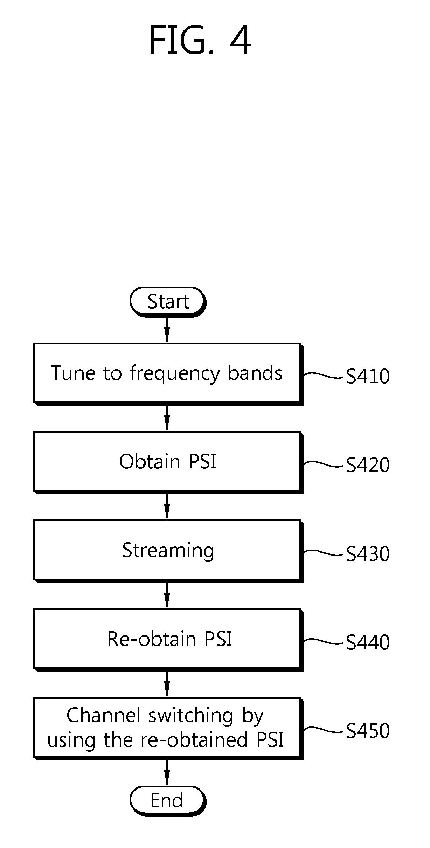

FIG. 4 is a flow diagram of a method for switching channels according to one embodiment of the present invention.

First, as shown in FIG. 4, the tuner 320, in response to the control of the controller, tunes a received signal to a frequency band of a particular TP S410. Due to the tuning, a particular TS is obtained. The PSI managing unit 330 extracts PSI from the TS and extracts PID from the extracted PSI S420. Next, the controller 340 extracts audio and video data from the TS by using the PID extracted from the PSI managing unit 330; and proceeds streaming of media by displaying the extracted audio and video data in the output unit 350.

Next, the PSI managing unit 330 re-obtains PSI information of other channels in the middle of media data streaming S440. And the PSI managing unit 330 extracts PIDs from the obtained PSI information. When using a plurality of tuners, the apparatus for switching channels according to one embodiment of the present invention can obtain information of other channels by using an idling tuner in addition to the tuner receiving a particular TS for streaming of media data. Also, the S440 step can be carried out at regular intervals.

The re-obtaining PSI information at the step of S440 is just an example; the channel information obtained again by the PSI managing unit may include SI, PAT, PMT, PID, and other information as well as PSI. The PID, being included in the PAT or PMT, can be delivered from the TS generator 100 to the TS receiver 300.

As the TS under reception includes PSI_other, which carries information about a plurality of channels except for channel information of a channel being received, in addition to the existing PSI, the step of S440 can be carried out to obtain PSI_other. In this case, no separate tuner is required to obtain channel information of other channels.

In a similar manner, the step of S440 can be carried out to obtain at least one of PAT_other, PMT_other, and PID_other as at least one of PAT_other, PMT_other, and PID_other is included in the TS. PAT_other is a set expression of PAT, which can be expressed in the form of an array, list, and the like. Similarly, PMT_other and PID_other can also be expressed as a set of PMTs and PIDs.

Also, PSI included in the TS may include all the PSI of other TSs. In this case, an actual field may be introduced to distinguish the corresponding PSI of the TS from the PSI of other TSs. At this time, the PSI can be included in the TS in the form of an array, list, and the like. In a similar manner, any one of PAT, PMT, and PID can be included in the TS along with PAT, PMT, and PID information of other TSs, and at this time, the actual field, which distinguishes the PAT, PMT, and PID information of the TS from the PAT, PMT, and PID information of other TSs, can be included therein together. In this case, an actual field meant for distinguishing information of the TS from the information of other TSs may not be used; to identify information of the TS, the corresponding information of the TS may be placed at a specific position among a plurality of PSI, PAT, PMT, PID, and other information.

Finally, in case a channel switching signal is generated, audio and video data are extracted from the TS of a channel switched by using the PID extracted by employing the PSI information re-obtained before receiving the channel switching signal S450. The channel information obtained in the step of re-obtaining channel information S440 can be stored in the memory. In this case, the re-obtained PSI can use the PSI stored in the memory. Receiving the channel switching signal can be carried out by receiving the user's channel switching input triggered as the TS receiver 300 displays channel information on the display unit.

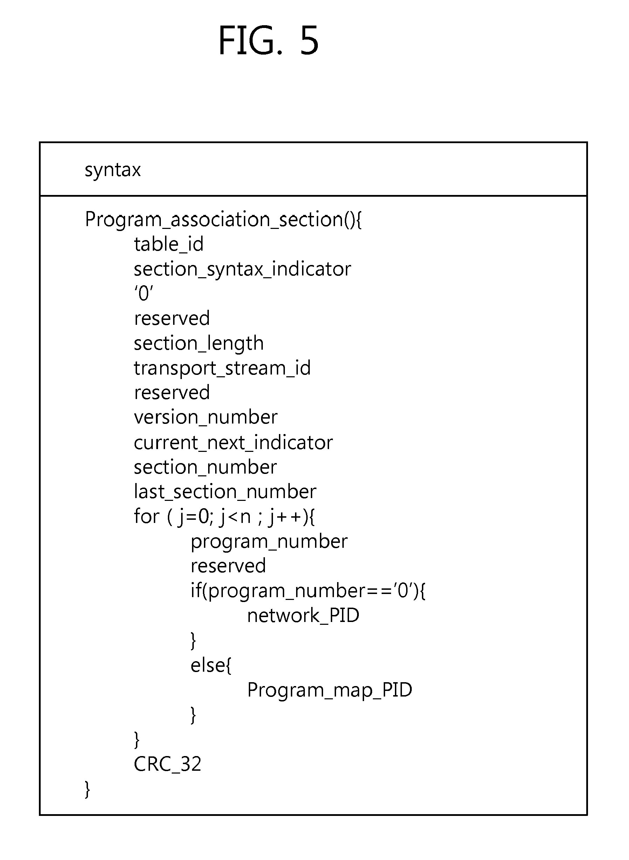

In what follows, structure of PAT and PMT according to one embodiment of the present invention will be described. FIG. 5 illustrates the conventional PAT.

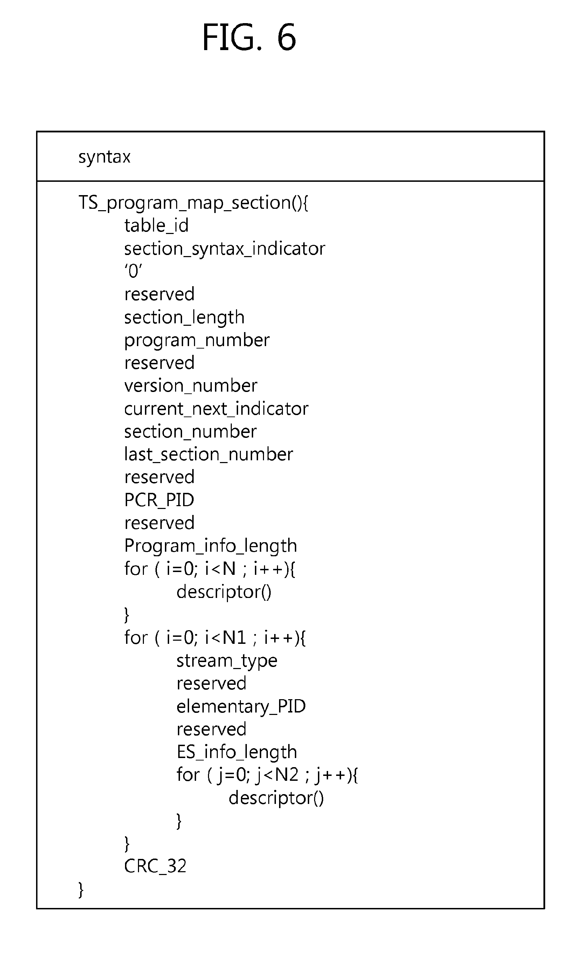

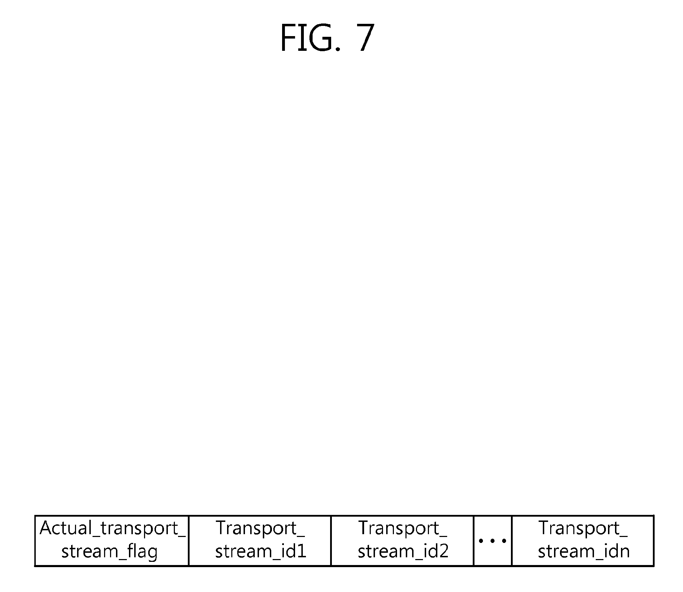

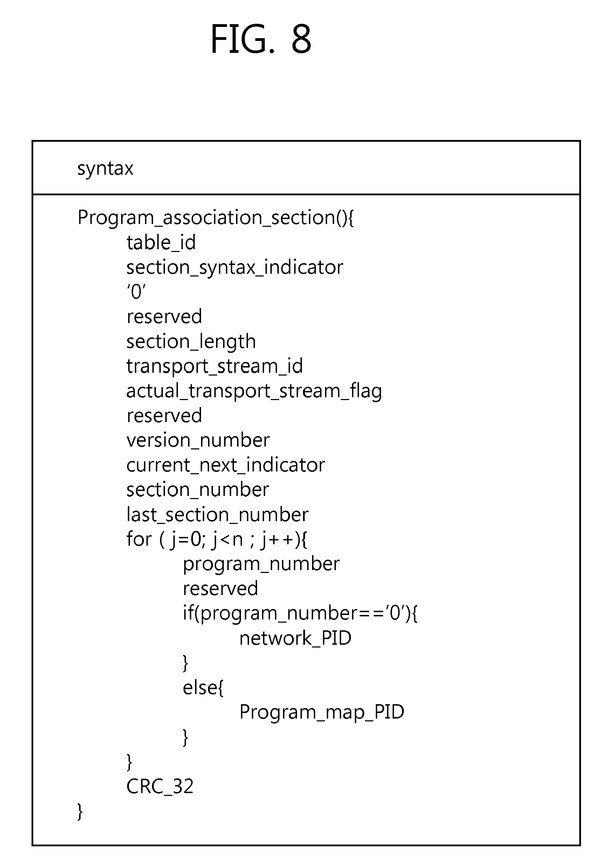

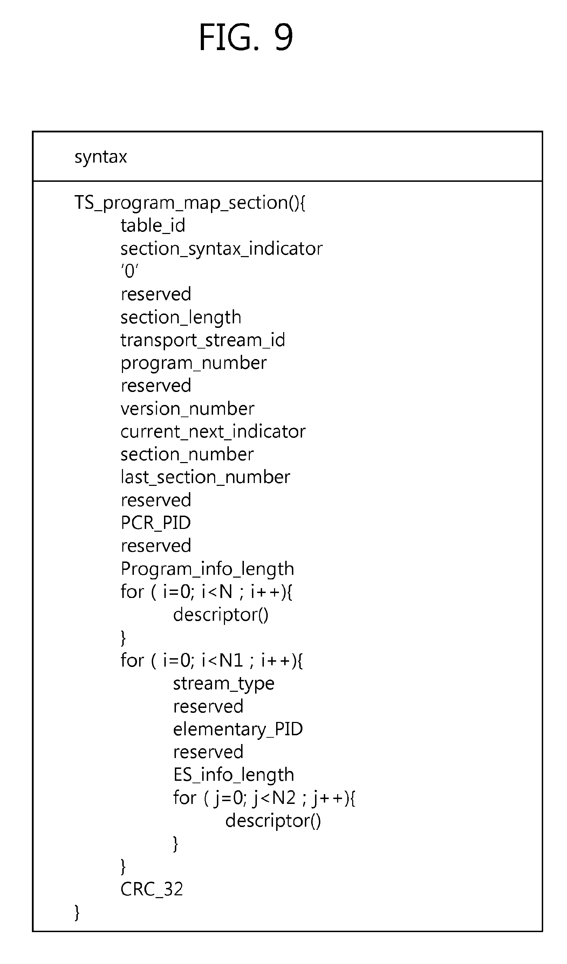

FIG. 6 illustrates the conventional PMT. FIG. 7 illustrates a transport_stream_id according to one embodiment of the present invention. FIG. 8 illustrates a PAT according to another embodiment of the present invention. FIG. 9 illustrates a PMT according to one embodiment of the present invention.

With reference to FIG. 5, PAT contains a transport_stream_id field representing the ID of a TS. The structure of the conventional PAT is unable to represent information of other TS. FIG. 7 illustrates a transport_stream_id according to one embodiment of the present invention. The transport_stream_id according to one embodiment of the present invention can be constructed in various ways. For example, with reference to the transport_stream_id of FIG. 7, an Actual_transport_stream_flag representing the ID of the corresponding TS appears first, and the IDs of other TSs follow the flag in a sequential order of transport_stream_id1, transport_stream_id2, ..., transport_stream_idn.

With reference to FIG. 8, PAT according to one embodiment of the present invention further includes an Actual_transport_stream_flag and includes a revised Transport_stream_id field. In the PAT according to one embodiment of the present invention, the Transport_stream_id field includes both the ID of a current TS and the ID of other TS. In other words, including IDs of a plurality of TSs enables a receiver of the TS to obtain IDs of other TSs without receiving other TSs. Therefore, a TS receiving apparatus doesn't have to make a tuner tuned to the frequency band of other TP to obtain information of the TS. The Actual_transport_Stream_flag is a flag representing the ID of the corresponding TS. The flag specifies at which position of the Transport_stream_id the ID of the TS is located. Various methods may be used for this end; in case the Transport_stream_id is an array, the Actual_transport_stream_id specifies in the form of an index at which cell of the array the ID of the TS is located. Or the Actual_transport_stream_id can be made to represent the ID of the corresponding TS while the Transport_stream_id is made to represent IDs of other TSs.

FIG. 6 illustrates the conventional PMT. With reference to FIG. 6, since the conventional PMT is transported and received together with an associated PAT in a TS, the conventional PMT does not include a field representing the ID of an associated TS.

FIG. 9 illustrates a PMT according to one embodiment of the present invention. The PMT according to one embodiment of the present invention further includes Transport_stream_id. Since a plurality of Transport_stream_ids are transported to carry out a method for switching channels according to one embodiment of the present invention, the PMT marks the matched Transport_stream_id.

Also, in a method for switching channels according to a second embodiment of the present invention, PMTs belonging to other TSs may be transported being included in a TS. In this case, to indicate the PMTs related to the corresponding TSs, each PMT needs to further include the Transport_stream_id.

In a method for switching channels according to a third embodiment of the present invention, a PMT may include multiple program_numbers and PIDs of ESs (elementary_PIDs) as a PAT includes multiple IDs of TSs.

In a method for switching channels according to a fourth embodiment of the present invention, PATs and PMTs belonging to TSs different from each other are configured to further include Transport_stream_id fields to indicate the IDs of the respective TSs and can be included in one TS. In this case, a plurality of PATs not belonging to the corresponding TS are included in the TS being configured in the form of PAT_other; in the same way, a plurality of PMTs not belonging to the corresponding TS can be included in the TS being configured in the form of PMT_other. Also, the aforementioned PAT and PMT can be compressed before being constructed.

Though this document provides descriptions of the present invention based on a series of functional blocks, the present invention are not limited to the above embodiments and appended drawings, but it should be clearly understood to those skilled in the art to which the present invention belongs that various substitutions, modifications, and changes can be made to the embodiments without departing from the technical scope off the present invention.

Combinations of the embodiments described above are not limited to the examples of this document. Rather, combinations of various other forms as well as the aforementioned embodiments can be made according to implementation and/or needs.

In the embodiments described above, although methods have been described through a series of steps or a block diagram, the present invention is not limited to the order of steps and some step can be carried out in a different order and as a different step from what has been described above, or some step can be carried out simultaneously with other steps. Also, it should be understood by those skilled in the art that those steps described in the flow diagram are not exclusive; other steps can be incorporated to those steps; or one or more steps of the flow diagram can be removes without affecting the technical scope of the present invention.

The embodiments described above include various forms of examples. Though it may be impossible to describe all the possible combinations to illustrate the various other forms, it should be understood by those skilled in the art that other combinations are possible. Therefore, it should be understood that the present invention includes all of the other substitutions, modifications, and changes belonging to the technical scope defined by the appended claims.

A method and apparatus for switching channels according to embodiments of the present invention described above stores channel information such as PSI or PID prior to channel switching and generates audio and video data of a switched channel by using the stored channel information. Thus the present invention removes a process of calculating channel information such as PSI or PID of a channel to be switched to at the time of channel switching, thereby achieving the effect of reducing channel zapping time.

## Claims

1. In a method for switching channels carried out by a media play apparatus, a method, comprising:
obtaining information about a plurality of channels;
receiving a channel switching signal; and
generating channel data according to the channel switching signal by using the obtained channel information.

2. The method of claim 1, wherein the obtaining information about a plurality of channels comprises obtaining channel information by using at least one idling tuner among a plurality of tuners.

3. The method of claim 2, wherein the obtaining channel information by using at least one idling tuner among a plurality of tuners comprises obtaining channel information of a channel not included in a transport stream under reception.

4. The method of claim 1, wherein the channel information is transported being contained in a program association table (PAT) or program map table (PMT) including identifiers for a plurality of transport streams.

5. The method of claim 1, wherein The PAT or PMT further includes an identifier indicating a transport stream in which the PAT or PMT is included.

6. The method of claim 1, wherein the channel information is transported being contained in a PAT or PMT of a transport stream, and the channel information further includes channel information of a channel contained in another transport stream.

7. The method of claim 1, wherein the obtaining information of a plurality of channels comprises obtaining channel information by using an IP network.

8. The method of claim 1, wherein the obtaining information about a plurality of channels comprises
receiving channel information from a transport stream received by using a tuner; and
receiving channel information of a channel not included in the transport stream from a server by using an IP network.

9. In an apparatus for switching channels of a media play apparatus, an apparatus, comprising:
at least one tuner obtaining information about a plurality of channels; and
a controller extracting channel information from the channel data and generating channel data according to a received channel switching signal by using the previously obtained channel information.

10. The apparatus of claim 9, wherein the channel information is obtained by using at least one idling tuner.

11. The apparatus of claim 9, wherein the channel information is transported being contained in a PAT or PMT including identifiers of a plurality of transport streams.

12. The apparatus of claim 9, wherein the channel information corresponds to a PAT or PMT which includes only channel information of a channel contained in another transport stream.

13. The apparatus of claim 9, wherein the channel information is a PAT or PMT which further includes channel information of a channel included in another transport stream, and the PAT or PMT further includes an identifier indicating a transport stream in which the PAT or PMT is included.

14. The apparatus of claim 9, further comprising an IP transceiver which receives channel information from a server by using an IP network.

15. The apparatus of claim 14, wherein the IP transceiver receives channel information of a channel from a server, the channel being not included in a transport stream received through the tuner
